# EUROPEAN PATENT SPECIFICATION

(11) **EP 0 424 938 B1**
(45) Date of publication and mention of the grant of the patent: **05.06.1996**
(21) Application number: 90120486.7
(22) Date of filing: 25.10.1990
(51) Int. Cl.: G03B 17/42

(54) **Winding/rewinding apparatus for a camera**
Aufroll-/Rückspulvorrichtung in einer Kamera
Dispositif pour enrouler ou réenrouler dans une caméra

(30) Priority: 26.10.1989 JP 279560/89; 30.03.1990 JP 84587/90
(43) Date of publication of application: 02.05.1991
(73) Proprietor: NIKON CORPORATION, Tokyo (JP)
(72) Inventor: Ezawa, Akira, Setagaya-ku, Tokyo (JP); Daitoku, Koichi, Sagamihara-shi, Kanagawa-ken (JP); Wakabayashi, Tsutomu, Tokyo (JP)
(74) Representative: Grünecker, Kinkeldey, Stockmair & Schwanhäusser Anwaltssozietät

(56) References cited:
- EP-A- 0 228 093
- DE-A- 3 130 412

## Description

### BACKGROUND OF THE INVENTION

### Field of the Invention

The present invention relates to an automatic film winding/rewinding apparatus for a still camera in which a cartridge containing a roll type film is loaded.

### Related Background Art

U.S. Patent No. 4832275 and U.S. Patent No. 4834306 propose a cartridge of a different construction from currently available type-135 cartridges. The cartridge proposed by the above U.S. Patents has a film whose leader portion is not extending to the outside of the cartridge but is extruded to the outside when the spool is rotated after the cartridge has been loaded into the camera.

Thus, this type of film cannot be advanced properly when loaded into a camera which is designed to be loaded a conventional type-135 film cartridge.

From EP-A-0,228,093, a photographic camera is known comprising a Winding/rewinding system for a photographic film in a 135-type cartridge loaded in said camera. The winding/rewinding system comprises a motor and gears enabling the rotation of a rewinding shaft engaging a film spool of the film cartridge, said advance rollers and a winding spool for winding the advanced film at the other side of a film exposure gate in an advance direction, and for rotating the said winding spool, advance rollers and said rewinding shaft in the reverse direction for rewinding the film on said cartridge spool. For switching between advance direction and reverse direction, the gears comprise a swingable selector means. For feeding the leading portion of film extending outside the film cartridge through the slit in the film loading chamber, the rewinding shaft is rotated in the forward direction to thus rotate the whole film cartridge together with the outwardly extending leading portion which, because of a resiliency of the film, will slide along the walls of the film loading chamber and eventually enter into the said slit of said film loading chamber to be fed toward the film advance rollers. While feeding the leading film portion through the slit of the film loading chamber the film will simultaneously be loosened in said film cartridge. When said film has been seized by the film advance rollers in the film advance mode, the film is fed toward the winding spool. The transportation speed of the film by the film advance rollers is set higher than the corresponding rotation speed of the winding spool and the cartridge spool. Thus, the slack of the initially loosened film on the cartridge spool is gradually reduced as the film advance rollers feeds the film faster than the cartridge spool is rotated. Eventually, the slack will be eliminated as the film is further advanced. Therefore, a clutch mechanism is provided to disconnect the rewinding shaft from the motor when the film is pulled by the advance rollers faster than the gears drive the rewinding shaft coupled to the cartridge spool. The speed of the winding spool is selected to be slower than the speed of the film advance rollers to protect the film from abnormally strong winding up tension. For rewinding the film, the rotation direction of the motor is reversed and the selector means is set in the rewinding mode to connect the rewinding shaft directly with the motor without a clutch means arranged therebetween. In the rewinding mode, the clutch means is now arranged between the advance rollers and the motor. During rewinding operation, the winding spool is directly connected to the motor to be rotated in the rewinding direction.

### SUMMARY OF THE INVENTION

An object of the present invention is to provide a film winding/rewinding apparatus for use with a photographic film contained in a cartridge for a camera in which the cartridge proposed by the above U.S. Patents is loaded, advanced, and rewound.
The foregoing object is solved according to the invention with a winding/rewinding apparatus according to claim 1.

### BRIEF DESCRIPTION OF THE DRAWINGS

Features and other objects of the present invention will be more apparent from the detailed description of the preferred embodiments with reference to the accompanying drawings in which:
Fig. 1 is a perspective view of a first embodiment of the invention;
Fig. 2 is an exploded perspective view of a one-way clutch 27 in Fig. 1;
Fig. 3 is a perspective view of a second embodiment; and
Fig. 4 is a perspective view of a third embodiment.

### DESCRIPTION OF THE PREFERRED EMBODIMENTS

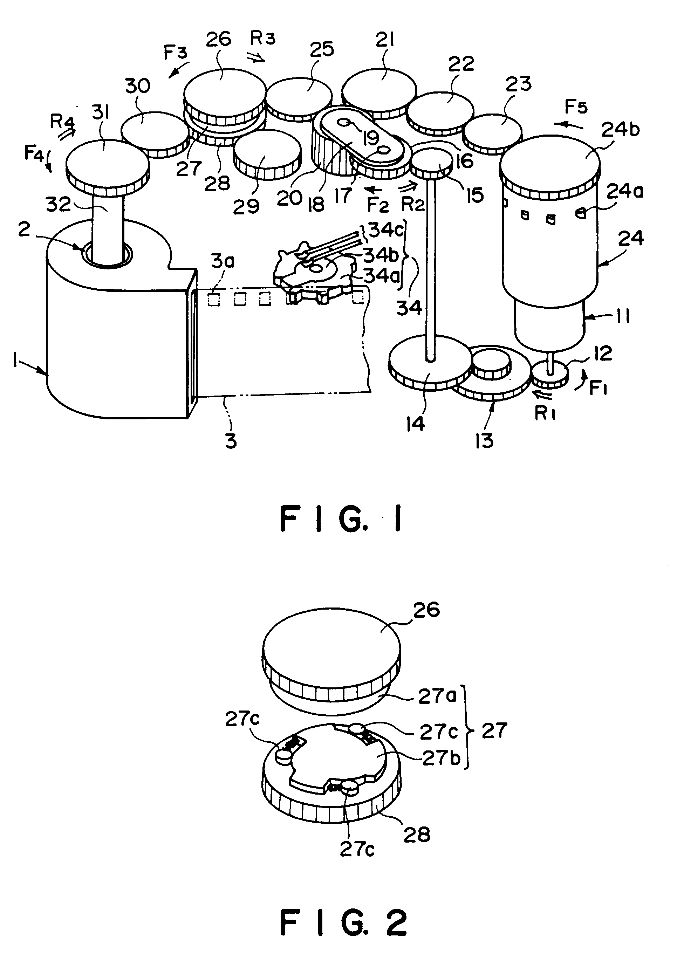

Fig. 1 shows a first embodiment of the present invention. In the figure, a film 3 is wrapped around a cartridge spool 2 within a cartridge 1. The film 3 has perforations 3a at an upper portion thereof. A spool 24 of a camera is provided with a paw 24a and a gear 24b that rotates integrally with the paw 24a. The rotation of a motor housed in the spool 24 is transmitted to a sun gear 16 through a pinion 12, a reduction gear 13, and gears 14 and 15. The sun gear 16 is adapted to rotate about a sun shaft 17 and an arm 18 is adapted to pivot about the sun shaft 17. Between the arm 18 and the sun shaft 17 is interposed a friction spring (not shown) which provides the arm and shaft with a friction therebetween. Thus, the arm 18 pivots in the same direction as the sun gear 16 rotates. A planetary gear 20 in mesh with the sun gear 16 is rotatably mounted on the shaft 19 on the arm 18, thus constructing a planetary gear mechanism together with the arm 18 and the sun gear 16. When the sun gear 16 rotates in the direction of F₂, the planetary gear 20 moves into meshing engagement with both gears 21 and 25 with the aid of the pivotal motion of arm 18. The gear 21 drives a gear 24b into rotation through gears 22 and 23. The gear 25 is in mesh with a gear 26 which is connected to a gear 28 via a one way clutch 27. The rotation of the gear 28 is transmitted to a rewinding gear 31 through a gear 30. The rewinding gear 31 in turn causes a fork 32 to rotate together. The fork 32 engages the key of cartridge spool 2 when the cartridge is loaded into the camera. When the sun gear 16 rotates in the direction of R₂, the planetary gear 18 pivots to mesh with a gear 29 so that the rotation of the sun gear 16 is transmitted to the gear 31 through the gears 28 and 30.

The clutch 27, as shown in Fig. 2, is of a cam-roller type formed of a cam 27b, rollers 27c, and outer sleeve 27a. The cam 27b is made in one piece with the gear 28 and the outer sleeve 27a integrally continuous with the gear 26. The rollers 27c are each urged by springs counterclockwise. The gears 26 and 28 are disengaged from each other when the gear 28 rotates counterclockwise relative to the gear 26 when seen from above in Fig. 2, and are engaged when the gear 28 rotates clockwise.

A sprocket 34a engages the perforations 3a and rotates when the film 3 is advanced. The sprocket 34a, a pattern 34b, and brushes 34c form an encoder 34.

The operation of an embodiment of the above-described construction will now be described below.

When the cartridge 1 is loaded into the camera, the fork 32 engages the cartridge spool 2. At this time, the film 3 has not been drawn yet from the cartridge 1. In response to a signal generated by the closure of a back lid (not shown) or a half-press operation of a release button (first-stage press of a two-stage press whose second-stage press causes the shutter to trip) an electric circuit (not shown) causes a motor 11 to rotate in the direction of F₁, causing the sun gear 16 to rotate in the direction of F₂. Therefore, the arm 18 also pivots in the direction of F₂ so that the planetary gear 20 meshes with both the gears 21 and 25. The rotation of the gear 21 causes the spool 24 to rotate in the direction of F₅ while the rotation of the gear 25 causes the gear 26 to rotate in the direction of F₃. This permits the one way clutch 27 to engage so that the rewinding-gear 31 is driven through the gears 28 and 30 to rotate in the direction of F₄. Thus, the fork 32 drives the cartridge spool 2 to rotate in the direction of F₄, so that the leading portion of the film 3 is extruded to the outside of the cartridge 1, passes by the aperture (not shown), and extends above the spool 24. Up to this stage of the operation, both the spool 24 and the fork 32 are rotated in the same direction, but since the gear ratios are selected so that as soon as the perforations 3a of the film 3 engage the paws 24a and the film 3 is wound around the spool 24, the spool 24 winds the film 3 off the cartridge 1 faster than the fork 32 advances the film 3. Thus, the cartridge spool 2 is caused by the film 3 to rotate faster than the fork 32 driven by the motor 11. Accordingly, the rewinding gear 31, gears 30 and 28 are rotated faster than the motor 11, so that the gear 28 rotates counterclockwise relative to the gear 26 allowing the one way clutch 27 to disengage. Thus, the gears 26 and 28 continue to rotate at different speeds. When the electric circuit (not shown) provides a signal indicative that the film 3 has advanced by a desired amount, the motor 11 is stopped. This completes the initial winding so that the first frame is positioned opposite to the exposure aperture. Thereafter, the electric circuit causes the motor 11 to rotate in the direction of F₁ to advance the film 3 by one frame when the film is exposed by a shutter or a release operation. The electric circuit controls the motor 11 to stop when the electric circuit receives from the encoder 34 a signal representative of one-frame-advancement of the film 3.

When all the frames are exposed in this manner, the electric circuit (not shown) controls the motor 11 to rotate in the direction of R₁, i.e., in the reverse direction. This causes the sun gear 16 to rotate in the direction of R₂ together with the arm 18 causing the planetary gear 20 to move out of engagement with the gears 21 and 25 but instead to move into engagement with the gear 29. Thus, the rotation of the gear 29 is transmitted to the rewinding gear 31 through the gears 28 and 30 to cause the cartridge spool 2 to rotate in the direction of R₄, allowing the cartridge 1 to rewind the film 3.

At this time, the gear 28 rotates clockwise relative to the gear 26, so that the one way clutch 27 moves into engagement. Thus the gear 26 is driven into free rotation together with the gear 25. The spool 24 is also driven into free rotation when the entire film 3 has returned into the cartridge 1.

When the whole film 3 has been received back into the cartridge 1, the encoder 34 stops outputting the signals and therefore the electric circuit detects no signal from the encoder 34 and stops the motor 11.

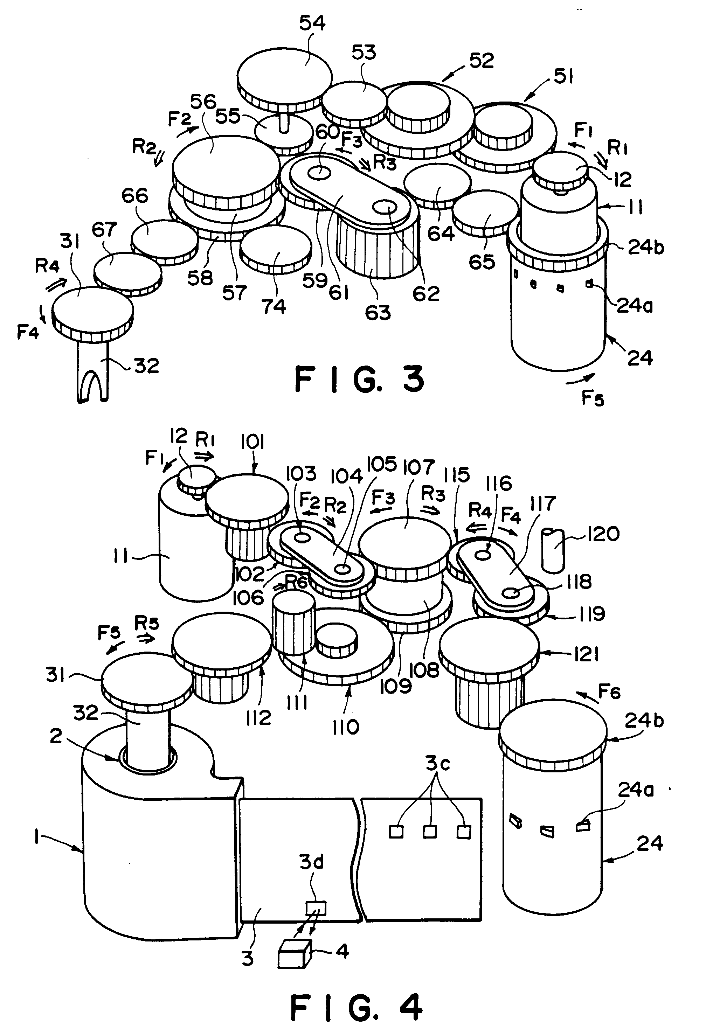

Fig. 3 shows a second embodiment of the present invention, where the cartridge 1 containing the film 3 and the encoder 34 are the same as those in the first embodiment and are therefore not shown. The same elements as in the first embodiment have been given the same reference numerals and the detailed description thereof are omitted.

The rotation of the motor 11 is transmitted to a gear 56 through reduction gears 51, 52, 54, and 55 and a gear 53. A sun gear 59 in mesh with the gear 56 is adapted to rotate about a sun shaft 60 and forms a planetary gear mechanism together with an arm 61, a planetary shaft 62, a planetary gear 63 and a spring (not shown) interposed between the sun gear 59 and the arm 61. When the gear 56 rotates in the direction of F₂, the sun gear 59 rotates in the direction of F₃ so that the planetary gear 63 moves into meshing engagement with a gear 64 through the pivotal motion of the arm 61 to thereby transmit rotation to the gear 24b through the gear 65. The gear 56 is connected to a gear 58 through a one way clutch 57 and causes the gear 31 to rotate through gears 66 and 67. When the gear 56 rotates in the direction of R₂, the sun gear 59 rotates in the direction of R₃, so that the arm 61 permits the planetary gear 63 to mesh with the gear 74 to transmit rotation to the gear 58.

The one way clutch 57 operates to engage and disengage in the direction opposite to the first embodiment; it engages when the gear 58 rotates counterclockwise relative to the gear 56 seen from above in Fig. 3, and disengages when the gear 58 rotates clockwise.

The operation of an apparatus of thus described construction will be described below.

When the cartridge 1 has been loaded into the camera, the fork 32 engages the cartridge spool 2. Then, in response to a signal generated by, for example, the closure of a back lid (not shown), an electric circuit (not shown) causes a motor 11 to rotate in the direction of F₁ causing the fork 32 to rotate in the direction of F₄ and the spool 24 in the direction of F₅. Since the gear ratios are selected so that the spool 24 winds the film 3 off the cartridge 1 faster than the fork 32 advances the film 3, when the leading portion of the film 3 arrives at the spool 24 and is then would therearound, the gear 58 rotates faster than the gear 56 in the direction of F₂ causing the one way clutch 57 to move out of engagement. When all the frames have been exposed by exposing each frame and subsequently winding up each frame following the initial winding operation, the motor 11 rotates in the direction of R₁ causing the planetary gear 63 to disengage the gear 64 and instead to engage the gear 74 to drive the gear 58 into rotation. The gear 58 has slightly more teeth than the gear 56, while gears 59, 63, and 74 have the same number of teeth, and therefore, the gear 58 rotates in the direction of R₂ slightly slower than the gear 56. While both the gears 56 and 58 actually rotate counterclockwise, the gear 58 rotates clockwise relative to the gear 56. This allows the one way clutch 57 to disengage. Thus, the rotation of the motor 11 in the direction of R₁ is transmitted to the fork 32 through the gear 56, sun gear 59, planetary gear 63, gear 74, and gear 58 so that the film 3 is rewound into the cartridge 1.

Fig. 4 illustrates a third embodiment of the present invention. The film 3 is formed with traction holes 3c at its end portion. The spool 24 has paws 24a on which the traction holes 3c are fitted a spool gear 24b which rotates integrally with the spool 24. The film 3 is formed with perforations 3d therein indicating the positions of respective frames which are detected by a photosensor 4 when passing above the photosensor, thus advancing one frame after another.

The rotation of the motor 11 is transmitted to a first sun gear 102 through the pinion 12 and a reduction gear 101. The first sun gear 102 is rotatable about a fixed sun shaft 103. The first sun gear 102, an arm 104, a friction spring (not shown) interposed between the first sun gear 102 and the arm 104, a planetary shaft 105, and a first planetary gear 106 form a planetary mechanism.

When the motor 11 rotates in the direction of F₁ to cause the first sun gear 102 to rotate in the direction of F₂, the first planetary gear 106 engages the gear 107 in meshing relation to cause the gear 107 to rotate in the direction of F₃. The rotation of the gear 107 is transmitted to the gear 109 which in turn transmits the rotation to the rewinding gear 31 through the reduction gear 110, gear 111, and reduction gear 112 so that the rewinding gear 31 rotates together with the fork 32 in the direction of F₅. The gear 107 is in mesh with a second sun gear 115 which is rotatable about a sun shaft 116 and forms a planetary gear mechanism together with an arm 117, a friction spring interposed between the second sun gear 115 and the arm 117, a planetary shaft 118, and a second planetary gear 119.

When the rotation of gear 107 in the direction of F₃ causes the second sun gear 115 to rotate in the direction of F₄, the second planetary gear 119 moves into meshing engagement with the reduction gear 121 to cause the spool gear 24b to rotate and therefore the spool 24 in the direction of F₆.

When the motor 11 rotates in the direction of R₁ to drive the first sun gear 102 into rotation in the direction of R₂, the first planetary gear 106 moves into meshing engagement with the gear 111 to cause the fork 32 to rotate in the direction of R₅ through the reduction gear 112 and rewinding gear 31. At the same time, the rotation of gear 111 causes the gear 109 to rotate in the direction of R₃ through the gear 110. The rotation of the gear 109 is transmitted by the one way clutch 108 to the gear 107 so that the gear 107 rotates in the direction of R₃. This causes the second sun gear 115 to rotate in the direction of R₄ permitting the arm 117 to pivot counterclockwise till the arm 117 abuts the limit pin 120. Thus, the second planetary gear 119 moves out of meshing engagement with the reduction gear 121.

The one way clutch 108 engages and disengages in the same direction as in the first embodiment. Seen from above in Fig. 4, the clutch disengages when the gear 109 rotates counterclockwise relative to the gear 107, and engages when the gear 109 rotates clockwise.

The operation of the third embodiment will now be described.

After the cartridge 1 is loaded into the camera, the fork 32 engages the cartridge spool 2. Then, in response to a signal generated by, for example, the closure of a back lid, an electric circuit (not shown) controls the motor 11 to rotate in the direction of F₁. Thus, the first sun gear 102 rotates in the direction of F₂ allowing the first planetary gear 106 to move into meshing engagement with the gear 107, which in turn rotates in the direction of F₃ causing the one way clutch 108 to engage. This allows the one way clutch 108 to drive the rewinding gear 31 into rotation in the direction of F₅. Thus, the fork 32 drives the cartridge spool 2 into rotation in the direction of F₅ extruding the leading portion of the film 3 so that the film 3 is advanced to the spool 24. The rotation of the gear 107 in the direction F₃ causes the second sun gear 115 to rotate in the direction of F₄ allowing the second planetary gear 119 to move into meshing engagement with the reduction gear 121 which in turn causes the spool 24 to rotate in the direction of F₆. In this embodiment, too, since the gear ratios are selected so that the spool 24 winds the film 3 off the cartridge 1 faster than the fork 32 advances the film 3, the cartridge spool 2 is rotated faster than is driven by the motor 11 through the fork 32 as soon as the leading portion of the film 3 arrives at the spool 24 and engages the paws 24a through the traction hole 3c to be wound therearound. Thus, the rewinding gear 31, reduction gear 112, gear 111, reduction gear 110 and gear 109 are also rotated by the film 3 faster than are driven by the motor 11. Thus, the gear 109 rotates counterclockwise relative to the gear 107 allowing the one way clutch 108 to disengage, and thus the gear 109 and 107 rotate at different speeds. When the photosensor detects the perforation 3d indicative of the first frame, the electric circuit controls the motor 11 to stop. This completes the initial winding (advancing a nonexposed frame). Thereafter, after each frame is exposed by tripping the shutter or by release operation, the circuit controls the motor 11 to rotate in the direction of F₁ to advance the film 3 and to stop when the photosensor 4 detects the perforation 3d indicative of the next frame.

After all the frames have been exposed, the circuit controls the motor 11 to rotate in the direction of R₁ so that the first sun gear 102 is driven into rotation in the direction of F₁. This in turn allows the first planetary gear 106 to move into meshing engagement with the gear 111 so that the gear 111 rotates in the direction of R₆ causing the fork 32 to rotate to drive the cartridge spool 1 into rotation in the direction of R₅. Thus, the film 3 will be rewound into the cartridge 1. At the same time, the rotation of the gear 111 in the direction of R₆, driven by the first planetary gear 106, is transmitted to the gear 109 through the reduction gear 110 so that the gear 109 rotates in the direction of R₃. The gear 109, then, rotates clockwise relative to the gear 107 causing the one way clutch 108 to engage. This also causes the gear 107 to rotate in the direction of R₃, so that the second sun gear 115 rotates in the direction R₄ allowing the second planetary gear 119 move out of meshing engagement with the reduction gear 121. The pivotal motion of arm 117 is stopped when it abuts the limit pin 120 and then the second planetary gear 119 continues its free rotation. Thus, the spool 24 is free to rotate as the film 3 is rewound into the cartridge 1.

In this manner, when the entire film 3 has been accommodated in the cartridge 1, the photo sensor 4 stops outputting pulse signals each of which indicates the perforations 3d. Detecting no pulse signals from the sensor 4, the circuit controls the motor 11 to stop.

In these embodiments, the difference in rotational speed can be detected to make a decision whether the gears 26 and 28 (gears 56 and 58 in the second embodiment, and gears 107 and 109 in the third embodiment) are different in rotational speed so as to ensure that the leading portion of the film 3 is wound off the cartridge by the spool 24. That is, after having detected a predetermined amount of advancement of the film 3 on the basis of the output (e.g., a signal of 20 pulses) of the encoder 34, the difference in rotational speed between the gears 26 and 28 (between the gears 56 and 58) may be detected by the use of a photosensor or the like. In the third embodiment, the photosensor 4 may be arrnaged to provide a function of encoder.

The one way clutches 27, 57, and 108 are not limited to a cam-and-roller type but may be a ratchetbased type.

These embodiments have been arranged so that the rotation of motor 11 is not transmitted to the spool 24 when rewinding, but these embodiments are only exemplary and the spool 24 may also be rotated so that the spool 24 advances the film 3 faster than the fork 32 rewinds the film 3. In which case, the film 3 wrapped around the spool 24 may be out of hooking engagement with the paws 24a when the film diameter becomes somewhat large and thereafter the spool 24 will rotate free from the film 3. Thus, the rewinding operation of the film 3 will be unaffected.

While the embodiment have been described with respect to the spool 24 provided with paws 24a for engaging the perforations 3a, the film 3 may be wound off the cartridge between the spool and pressing rollers as disclosed in the Utility Model Publication JP-92-1-25938.

By the use of a simple construction in which a motor adapted to rotate in a forward as well as a reverse direction is combined with a rotation transmission system having a one way clutch mechanism, the aforementioned winding/rewinding apparatus of a camera ensures smooth and proper operation of the extruding the leading portion of film 3 from the cartridge 1, winding the leading portion around the spool 24, winding up the film after each frame exposure, and rewinding the film 3 into the cartridge.

## Claims

1. A winding/rewinding apparatus for use with a photographic film contained in a cartridge (1) having a cartridge spool (2) and a cartridge shell constituted so that the film is advanced from said cartridge by a rotation of said cartridge spool, the apparatus comprising:
a winding spool (24) on which the film (3) advanced from said cartridge is wound when said winding spool (24) rotates;
a rewinding shaft (32) for engaging the cartridge spool and capable of rotating the cartridge spool with respect to said cartridge shell;
a motor (11);
transmission means (21-24a, 24b, 25, 26, 28-31) for transmitting a drive force from said motor (11) to said winding spool (24) and said rewinding shaft (32) so as to rotate said cartridge spool (2) in relation to said cartridge shell to feed the film (3) from said cartridge (1), and to make said winding spool (24) wind the advanced film (3) therearound, said transmission means transmitting the drive force of said motor (11) so that a speed at which said film (3) is wound by said winding spool (24) is higher than a speed at which said film is advanced by said rewinding shaft (32);
clutch means (27); and
selector means (17-20) capable of selecting a first operation mode in which said rewinding shaft is rotated through said clutch means in a direction where the film is pulled out from the cartridge, or a second operation mode in which said rewinding shaft is rotated in the reverse direction where the film is rewound into said cartridge;
characterized in that:
said clutch means (27) is arranged to disengage the motor from said rewinding shaft (32), so that the drive force of the motor (11) is not transmitted to said rewinding shaft (32) when said rewinding shaft (32) is driven by the film (3) when the film is wound by the winding spool (24), whereby the speed of said rewinding shaft (32) increases; and
said selector means disconnects a power transmission between said winding spool and said motor when the second mode is selected.

2. A winding/rewinding apparatus for use with a photographic film according to claim 1, wherein said clutch means (27) includes a first rotating member (26) and a second rotating member (28) drivingly connected to said rewinding shaft (32), and a one-way clutch (27) provided between the first and second rotating members, said selector means selectively transmitting the drive force of said motor (11) to said first rotating member (26) and said second rotating member (28).

3. A winding/rewinding apparatus for use with a photographic film according to claim 2, wherein said selector means causes said motor (11) to engage said first rotating member (26) when said motor (11) rotates in a first direction, and causes said motor to engage said second rotating member (28) when said motor (11) rotates in a second direction.

4. A winding/rewinding apparatus for use with a photographic film according to claim 1, wherein said clutch means includes:
a first rotating member (26) operatively connected to said motor (11);
a second rotating member (28) operatively connected to said rewinding shaft (22); and
a one-way clutch (27) provided between said first and second rotating members; and
said selector means selectively causing said first rotating member (26) to engage said winding spool (24) and said second rotating member (28).

5. A winding/rewinding apparatus for use with a photographic film according to claim 4, wherein said selector means causes said first rotating member (26) to engage said winding spool (24) in response to the rotation of said first rotating member (26) in a first direction, and causes said first rotating member (26) to engage said second rotating member (28) in response to the rotation of said first rotating member (26) in a second direction.

6. A winding/rewinding apparatus for use with a photographic film according to claim 1, wherein said clutch means includes:
a first rotating member (26);
a second rotating member (28) drivingly connected to said rewinding shaft (32);
a one-way clutch (27) provided between said first and second rotating members; wherein said selector means causes said motor (11) to engage said first rotating member (26) and said winding spool (24) in response to the rotation of said motor (11) in a first direction, and causes said motor to engage said rewinding shaft (32) in response to the rotation of said motor (11) in a second direction.

7. A winding/rewinding apparatus for use with a photographic film according to claim 6, wherein said selector means includes a first selector means (115-119) provided between said motor (11), said first rotating member (107), and said rewinding shaft (32), and a second selector means (101-106) provided between said first rotating member (107) and said winding spool (24).

## Patentansprüche

1. Eine Vor-/Rückspulvorrichtung zur Verwendung mit einem fotografischen Film, der in einer Kassette (1) enthalten ist, die eine Kassettenspule (2) und eine Kassettenschale aufweist, die so aufgebaut ist, daß der Film aus der Kassette mittels Drehung der Kassettenspule vorgeschoben wird, wobei die Vorrichtung umfaßt:
eine Aufwickelspule (24), auf der der aus der Kassette vorgeschobene Film (3) aufgewickelt wird, wenn sich die Aufwickelspule (24) dreht;
eine Rückspulwelle (32) zum Eingriff in die Kassettenspule, die in der Lage ist, die Kassettenspule bezüglich der Kassettenschale zu drehen;
einen Motor (11);
eine Getriebevorrichtung (21-24a, 24b, 25, 26, 28-31) zum Übertragen einer Antriebskraft vom Motor (11) auf die Aufwikkelspule (24) und die Rückspulwelle (32), um die Kassettenspule (2) in bezug auf die Kassettenschale zu drehen, um den Film (3) aus der Kassette (1) herauszuführen, und um zu bewirken, daß die Aufwickelspule (24) den vorgeschobenen Film (3) darum herum aufwickelt, wobei die Getriebevorrichtung die Antriebskraft des Motors (11) derart überträgt, daß eine Geschwindigkeit, mit der der Film (3) durch die Aufwickelspule (24) aufgewickelt wird, höher ist als eine Geschwindigkeit, mit der der Film (3) durch die Rückspulwelle (32) vorwärts bewegt wird;
eine Kupplungsvorrichtung (27); und
eine Auswahlvorrichtung (17-20), die in der Lage ist, einen ersten Betriebsmodus auszuwählen, bei dem die Rückspulwelle durch die Kupplungsvorrichtung in einer Richtung gedreht wird, in der der Film aus der Kassette herausgezogen wird, oder einen zweiten Betriebsmodus, bei dem die Rückspulwelle in der umgekehrten Richtung gedreht wird, in der der Film in die Kassette zurückgespult wird;
dadurch gekennzeichnet, daß
die Kupplungsvorrichtung (27) so angeordnet ist, daß sie den Motor von der Rückspulwelle (32) abkoppelt, so daß die Antriebskraft des Motors (11) nicht auf die Rückspulwelle (32) übertragen wird, wenn die Rückspulwelle (32) von dem Film (3) getrieben wird, wenn der Film durch die Aufwickelspule (24) aufgewickelt wird, wobei sich die Geschwindigkeit der Rückspulwelle (32) erhöht; und
die Auswahlvorrichtung eine Kraftübertragung zwischen der Aufwickelspule und dem Motor unterbricht, wenn der zweite Modus ausgewählt ist.

2. Eine Vor-/Rückspulvorrichtung zur Verwendung mit einem fotografischen Film gemäß Anspruch 1, wobei die Kupplungsvorrichtung (27) ein erstes sich drehendes Teil (26) und ein zweites sich drehendes Teil (28) umfaßt, die antriebsmäßig mit der Rückspulwelle (32) verbunden sind, sowie eine Einwegkupplung (27), die zwischen dem ersten und zweiten sich drehenden Teil vorgesehen ist, wobei die Auswahlvorrichtung selektiv die Antriebskraft des Motors (11) auf das erste sich drehende Teil (26) und das zweite sich drehende Teil (28) überträgt.

3. Eine Vor-/Rückspulvorrichtung zur Verwendung mit einem fotografischen Film gemäß Anspruch 2, wobei die Auswahlvorrichtung bewirkt, daß der Motor (11) mit dem ersten sich drehenden Teil (26) in Eingriff steht, wenn der Motor (11) sich in einer ersten Richtung dreht, und bewirkt, daß der Motor mit dem zweiten sich drehenden Teil (28) in Eingriff steht, wenn der Motor (11) sich in einer zweiten Richtung dreht.

4. Eine Vor-/Rückspulvorrichtung zur Verwendung mit einem fotografischen Film gemäß Anspruch 1, wobei die Kupplungsvorrichtung enthält:
ein erstes sich drehendes Teil (26), das funktionell mit dem Motor (11) in Verbindung steht;
ein zweites sich drehendes Teil (28), das funktionell mit der Rückspulwelle (22) in Verbindung steht; und
eine Einwegkupplung (27), die zwischen dem ersten und zweiten sich drehenden Teil vorgesehen ist; und
wobei die Auswahlvorrichtung selektiv bewirkt, daß das erste sich drehende Teil (26) in Eingriff mit der Aufwickelspule (24) und dem zweiten sich drehenden Teil (28) steht.

5. Eine Vor-/Rückspulvorrichtung zur Verwendung mit einem fotografischen Film gemäß Anspruch 4, wobei die Auswahlvorrichtung bewirkt, daß das erste sich drehende Teil (26) mit der Aufwickelspule (24) in Eingriff steht, in Erwiderung auf die Drehung des ersten sich drehenden Teils (26) in einer ersten Richtung, und bewirkt, daß das erste sich drehende Teil (26) mit dem zweiten sich drehenden Teil (28) in Eingriff steht in Erwiderung auf die Drehung des ersten sich drehenden Teils (26) in einer zweiten Richtung.

6. Eine Vor-/Rückspulvorrichtung zur Verwendung mit einem fotografischen Film gemäß Anspruch 1, wobei die Kupplungsvorrichtung enthält:
ein erstes sich drehendes Teil (26);
ein zweites sich drehendes Teil (28), das antriebsmäßig mit der Rückspulwelle (32) in Verbindung steht;
eine Einwegkupplung (27), die zwischen dem ersten und zweiten sich drehenden Teil vorgesehen ist; wobei die Auswahlvorrichtung bewirkt, daß der Motor (11) mit dem ersten sich drehenden Teil (26) und der Aufwickelspule (24) in Eingriff steht in Erwiderung auf die Drehung des Motors (11) in einer ersten Richtung, und bewirkt, daß der Motor mit der Rückspulwelle (32) in Eingriff steht in Erwiderung auf die Drehung des Motors (11) in einer zweiten Richtung.

7. Eine Vor-/Rückspulvorrichtung zur Verwendung mit einem fotografischen Film gemäß Anspruch 6, wobei die Auswahlvorrichtung eine erste Auswahlvorrichtung (115-119) enthält, die zwischen dem Motor (11), dem ersten sich drehenden Teil (107) und der Rückspulwelle (32) vorgesehen ist, und wobei eine zweite Auswahlvorrichtung (101-106) zwischen dem ersten sich drehenden Teil (107) und der Aufwickelspule (24) vorgesehen ist.

## Revendications

1. Dispositif de bobinage/rembobinage destiné à être utilisé avec un film photographique contenu dans une cartouche (1) possédant une bobine de cartouche (2) et une coque de cartouche agencés de telle sorte que le film avance à partir de ladite cartouche sous l'effet d'une rotation de ladite bobine de cartouche, le dispositif comprenant :
une bobine d'enroulement (24), sur laquelle le film (3), qui avance à partir de ladite cartouche, est bobiné lorsque ladite bobine d'enroulement (24) tourne;
un arbre de rembobinage (32) pour engrener avec la bobine de cartouche et apte à faire tourner la bobine de cartouche par rapport à ladite coque de cartouche;
un moteur (11);
des moyens de transmission (21-24a,24b,25,26,28-31) pour transmettre une force d'entraînement dudit moteur (11) à ladite bobine d'enroulement (24) et audit arbre de rembobinage (32) pour faire tourner ladite bobine de cartouche (2) par rapport à ladite coque de cartouche pour amener le film (3) à partir de ladite cartouche (1), et amener ladite bobine d'enroulement (24) à enrouler sur elle le film avancé (3), lesdits moyens de transmission transmettant la force d'entraînement dudit moteur (11) de sorte qu'une vitesse, à laquelle ledit film (3) est bobiné par ladite bobine d'enroulement (24), est supérieure à une vitesse à laquelle ledit arbre de rembobinage (32) fait avancer ledit film;
des moyens d'embrayage (27); et
des moyens de sélection (17-20) aptes à sélectionner un premier mode de fonctionnement, dans lequel ledit arbre de rembobinage est entraîné en rotation par lesdits moyens d'embrayage dans une direction, dans laquelle le film est tiré de la cartouche, ou un second mode de fonctionnement, dans lequel ledit arbre de rembobinage est entraîné en rotation dans le sens inverse, lorsque le film est rembobiné dans ladite cartouche;
caractérisé en ce que
lesdits moyens d'embrayage (27) sont agencés de manière à désaccoupler le moteur dudit arbre de rembobinage (32) de sorte que la force d'entraînement du moteur (11) n'est pas transmise audit arbre de rembobinage (32) lorsque ledit arbre de rembobinage (32) est entraîné par le film (3) lorsque ce dernier est enroulé par la bobine d'enroulement (24), ce qui entraîne un accroissement de la vitesse dudit arbre de bobinage (32); et
lesdits moyens de sélection déconnectent une transmission de puissance entre ladite bobine d'enroulement et ledit moteur lorsque le second mode est sélectionné.

2. Dispositif de bobinage/rembobinage destiné à être utilisé avec un film photographique selon la revendication 1, dans lequel lesdits moyens d'embrayage (27) comprennent un premier élément rotatif (26) et un second élément rotatif (28) raccordé selon une liaison d'entraînement audit arbre de rembobinage (32), et un embrayage unidirectionnel (27) prévu entre les premier et second éléments rotatifs, lesdits moyens de sélection transmettant de façon sélective la force d'entraînement dudit moteur (11) audit premier élément rotatif (26) et audit second élément rotatif (28).

3. Dispositif de bobinage/rembobinage destiné à être utilisé avec un film photographique selon la revendication 2, dans lequel lesdits moyens de sélection amènent ledit moteur (11) à engrener avec ledit premier élément rotatif (26) lorsque ledit moteur (11) tourne dans un premier sens, et amènent ledit moteur à engrener avec ledit second élément rotatif (28) lorsque ledit moteur (11) tourne dans un second sens.

4. Dispositif de bobinage/rembobinage destiné à être utilisé avec un film photographique selon la revendication 1, dans lequel lesdits moyens d'embrayage comprennent :
un premier élément rotatif (26) raccordé de façon opérationnelle audit moteur (11);
un second élément rotatif (28) raccordé de façon opérationnelle audit arbre de rembobinage (32); et
un embrayage unidirectionnel (27) prévu entre lesdits premier et second éléments rotatifs; et
lesdits moyens de sélection amenant de façon sélective ledit premier élément rotatif (26) à engrener avec ladite bobine d'enroulement (24) et avec ledit second élément rotatif (28).

5. Dispositif de bobinage/rembobinage destiné à être utilisé avec un film photographique selon la revendication 4, dans lequel lesdits moyens de sélection amènent ledit premier élément rotatif (26) à engrener avec ladite bobine d'enroulement (24) en réponse à la rotation dudit premier élément rotatif (26) dans un premier sens, et amènent ledit premier élément rotatif (26) à engrener avec ledit second élément rotatif (28) en réponse à la rotation dudit premier élément rotatif (26) dans un second sens.

6. Dispositif de bobinage/rembobinage destiné à être utilisé avec un film photographique selon la revendication 1, dans lequel lesdits moyens d'embrayage comprennent :
un premier élément rotatif (26);
un second élément rotatif (28) raccordé selon une liaison d'entraînement audit arbre de rembobinage (32);
un embrayage unidirectionnel (27) disposé entre lesdits premier et second éléments rotatifs; lesdits moyens de sélection amenant ledit moteur (11) à engrener avec ledit premier élément rotatif (26) et avec ladite bobine d'enroulement (24) en réponse à la rotation dudit moteur (11) dans un premier sens, et amenant ledit moteur à engrener avec ledit arbre de rembobinage (32) en réponse à la rotation dudit moteur (11) dans un second sens.

7. Dispositif de bobinage/rembobinage destiné à être utilisé avec un film photographique selon la revendication 6, dans lequel lesdits moyens de sélection comprennent des premiers moyens de sélection (115-119) prévus entre ledit moteur (11), ledit premier élément rotatif (107) et ledit arbre de rembobinage (32), et les seconds moyens de sélection (101-106) prévus entre ledit premier élément rotatif (107) et ladite bobine d'enroulement (24).
